# EUROPEAN PATENT SPECIFICATION

(11) **EP 1 705 085 B1**
(45) Date of publication and mention of the grant of the patent: **22.08.2007**
(21) Application number: 06111296.7
(22) Date of filing: 17.03.2006
(51) Int. Cl.: B60R 25/04

(54) **Apparatus for authenticating vehicle driver**
Vorrichtung zur Authentifizierung eines Fahzeugfahrers
Dispositif d'authentification du conducteur d'un véhicule

(30) Priority: 22.03.2005 JP 2005082163
(43) Date of publication of application: 27.09.2006
(73) Proprietor: OMRON CORPORATION, Kyoto-shi, Kyoto 600-8530 (JP)
(72) Inventor: Ota, Shunji c/o OMRON Corp. 801, Minamifudodo-cho,, Kyoto-shi Kyoto 600-8530 (JP)
(74) Representative: Weihs, Bruno Konrad

(56) References cited:
- EP-A- 0 924 123
- WO-A-20/05120878
- DE-A1- 19 729 404
- DE-U1- 20 316 267
- FR-A- 2 739 821
- US-A1- 2003 142 849

## Description

### BACKGROUND OF THE INVENTION

The present invention relates to an apparatus for authenticating a driver of a vehicle such as a car, the apparatus being adapted to allow a potential driver to start an engine.

Many types of anti-theft apparatuses which permit a driver to start a vehicle only after authentication of the driver's biological information have been proposed to improve security against vehicle theft.

Examples of the apparatuses include an anti-theft apparatus adapted to capture a potential driver's facial image and to compare the captured facial image with a pre-registered facial image of an authorized driver. Such apparatus is proposed in JP H11-43016A and JP 2004-330979A.

JP H11-43016A discloses an anti-theft apparatus for vehicles configured to capture a facial image of a potential driver in a driver's seat, and to compare the captured facial image with a pre-registered facial image of an authorized driver. The apparatus allows the driver to start an engine if a match of facial images between the authorized driver and the potential driver is made.

JP 2004-330979A discloses an apparatus for vehicles configured to capture a facial image of a driver in a driver seat, and to compare the captured facial image with a prestored facial image of an authorized driver. If a match of facial images between the authorized driver and the potential driver is made, the apparatus allows the driver to start an engine under the condition that the driver's face is oriented in a proper direction.

Patent application WO 2005/120878 published after the priority date of the present application, discloses a security device for preventing a person, which is not fit to drive, to take control of a means of transport. The device comprises means for performing a spectral analysis of radiation reflected from the eye of a person who is in the driver seat. If the spectral analysis reveals that the person is not fit to drive, for instance because of too much alcohol in the blood, then an immobiliser is activated to inhibit starting the engine. In one embodiment the device may also include a weight detector, operatively coupled to the driver seat. Once the weight detector has detected the presence of the person in the driver seat, any subsequent vacation of the seat will trigger the weight detector to provide a trigger signal causing immobilising the vehicle. The weight detector prevents a person from using its eye to de-activate the immobiliser and then subsequently vacating the seat and allowing an "unauthorised" person to take control of the vehicle.

Patent application FR 2 789 821 shows an anti-theft device for a car. The device comprises an immobiliser that prevent running of a motor of the car and means to detect the presence or absence of a person in the driver seat. If the seat is detected to be vacant after the motor has been started and then occupied the immobiliser will stop the engine if an appropriate code has not been typed on a key pad. In addition, examples of biological information include, but are not limited to, physical characteristics such as faces, fingerprints, irises, retinas or veins.

However, all proposed apparatuses sometimes cause inconveniences since the apparatuses require biometrics authentication every time a driver starts the vehicle. Particularly, the apparatuses cause inconveniences in situations that involve temporary stop of a vehicle, such as where a driver stalls a vehicle during driving or where a driver stops at a red light with a vehicle engine stopped in accordance with the idling stop practice. In such situations, the apparatuses require even authenticated drivers to undergo biometrically authentication before restarting the vehicle engine. Such re-authentication is an unnecessary time-consuming procedure and should be avoided in light of smooth traffic and driver psychology.

A feature of the invention is to provide an authenticating apparatus for a vehicle driver, the apparatus being adapted to skip a driver authentication in a situation where such authentication is not necessary in light of security against vehicle theft, thereby improving efficiency and safety of driving.

### SUMMARY OF THE INVENTION

An apparatus for authenticating a driver of a vehicle has a biometrics authenticating section adapted to authenticate a person in a driver seat of the vehicle based on biological information of the person, an ignition controller adapted to permit an authenticated person to start the vehicle, and a driver detector adapted to detect absence of the authenticated person from the driver seat.

Examples of biological information include, but are not limited to, physical characteristics such as faces, fingerprints, irises, retinas or veins. If faces are to be verified, an image capturing section such as a camera can be used to capture a facial image. After the camera captures a facial image of a driver, the captured facial image is compared with a pre-registered facial image. If match of the respective facial images is made, the driver is permitted to start the vehicle.

Use of the biometrics authentication enables the vehicle to be more secure against vehicle theft than keys. Examples of the driver detector include, but are not limited to, a seat sensor disposed in the driver seat, and a door sensor for detecting whether or not the driver is in the driver seat.

The authenticating apparatus is provided with a control section adapted to activate the ignition controller to permit the authenticated person to start the vehicle. If the driver detector detects absence of the authenticated person from the driver seat, the control section requires another authentication process by the biometrics authenticating section in order to activate the ignition controller. If the driver detector does not detect absence of the authenticated person from the driver seat, the control section does not require another authentication process by the biometrics authenticating section in order to activate the ignition controller.

Accordingly, the authenticating apparatus enables restarting of the vehicle, without a driver authentication, in situations such as where a driver stalls a vehicle during driving or where a driver stops at a red light with a vehicle engine stopped in accordance with the idling stop practice.

According to another aspect of the invention, the authenticating apparatus may be provided with a shock sensor adapted to detect a predetermined shock applied to the vehicle. For a predetermined period after detection of the predetermined shock, the control section requires neither authentication by the biometrics authenticating section nor detection by the driver detector in order to activate the ignition controller.

Accordingly, the authenticating apparatus allows the driver to restart the vehicle promptly after a road accident, even if a biometrics authenticating section can not verify the driver's biological information due to an injury caused by the accident.

### BRIEF DESCRIPTION OF THE DRAWINGS

FIG.1 is a schematic diagram of a car employing an authenticating apparatus according to an embodiment of the invention;
FIG.2 is a schematic diagram of an arrangement of a camera;
FIG.3 is a block diagram of the authenticating apparatus; and
FIG.4 is a flow chart of a process performed by the authenticating apparatus.

### DETAILED DESCRIPTION OF THE PREFERRED EMBODIMENTS

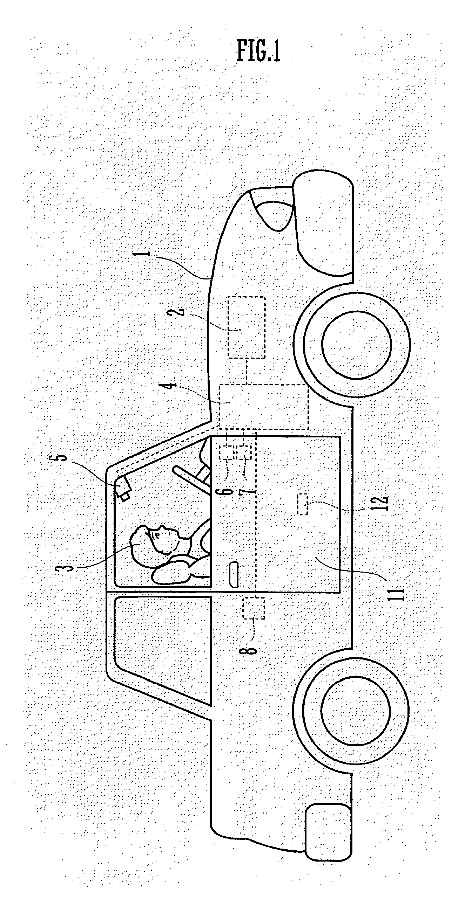

FIG.1 illustrates a vehicle, such as a car 1, provided with an authenticating apparatus such as a driver authenticating apparatus.

The car 1 includes an engine controller 2 connected to an ignition switch (not shown). As in the case of a conventional car, a first person, such as a potential driver 3 (hereinafter referred to merely as driver 3), inserts a key into a receptacle of the ignition switch before starting an engine.

The engine controller 2 connects to a controller 4 configured to perform image authentications. The controller 4 is adapted to verify biological information of the driver 3. The controller 4 connects to a CMOS camera 5, a registration switch 6, an enable switch 7, a door sensor 8, a seat sensor 12, and a crash sensor 13.

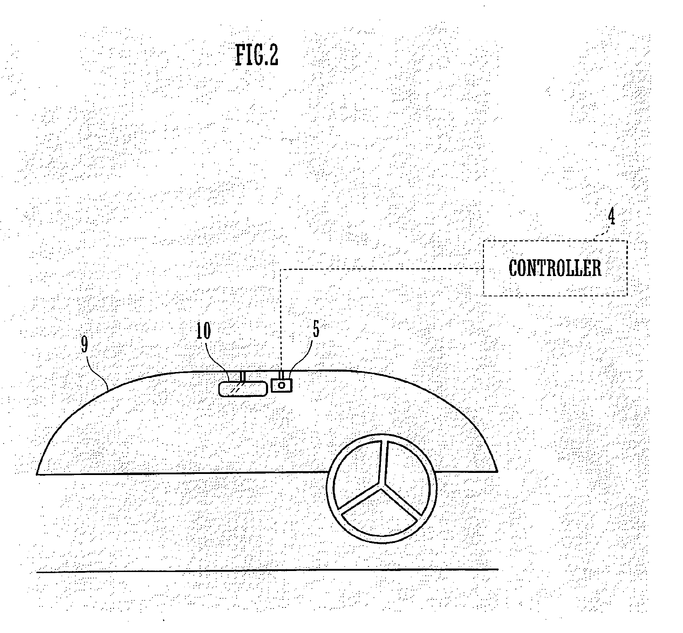

The CMOS camera 5 is a logarithmic transformation type camera with wide dynamic range. The CMOS camera 5 is mounted on an upper part of a windshield 9, as illustrated in FIG.2. The CMOS camera 5 is disposed adjacent to an interior rear-view mirror 10 that is also mounted on an upper part of the windshield 9. The CMOS camera 5 is adapted to have an angle of view wide enough to capture a person in a driver seat.

The registration switch 6 is adapted to permit a person in the driver seat to register a facial image thereof. Turning on the switch 6 causes the controller 4 to store a facial image being captured by the CMOS camera 5 in a registration memory (registration section) provided in the controller 4. More specifically, the controller 4 stores in the registration memory a computed feature data representing a facial feature of the captured facial image. Examples of match of captured and registered facial images include, but are not limited to, a match of computed feature data of the respective facial images.

The enable switch 7 is adapted to permit a driver or a passenger to enable or disable respective functions of the CMOS camera 5 and the controller 4. Turning on the enable switch 7 causes the functions of the CMOS camera 5 and the controller 4 to be in enabled state.

The seat sensor 12 is adapted to sense weight of a person applied to the driver seat.

The crash sensor 13 has an acceleration sensor. When the acceleration sensor detects rapid velocity change, the crash sensor 13 determines that the car crashes something and receives a predetermined shock.

The door sensor 8 is adapted to detect whether the door 11 is in an open state or a closed state. The CMOS camera 5 and an image verifying section in the controller 4 start operation when the driver is seated in the driver seat.

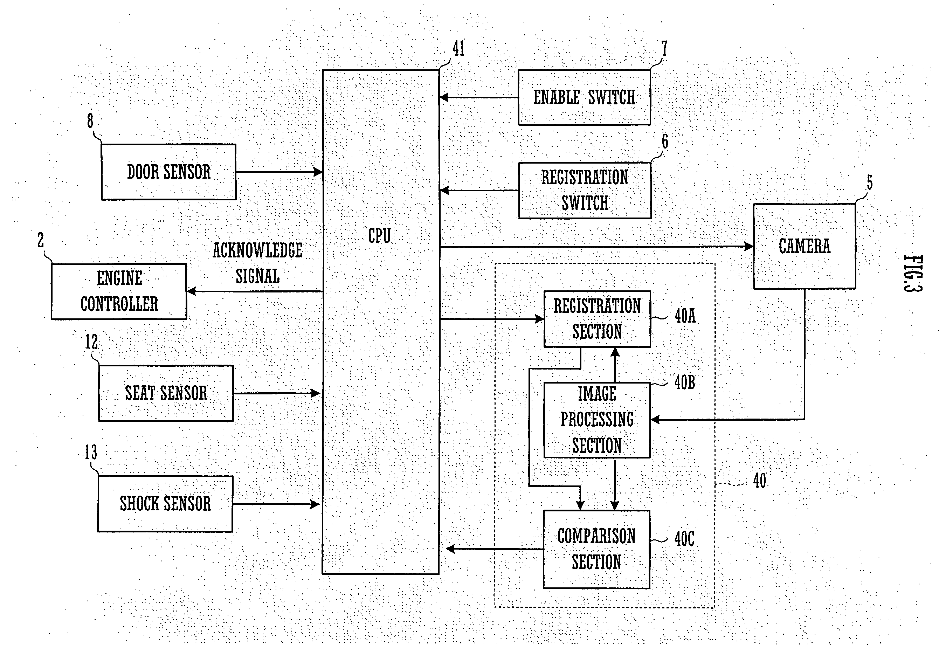

FIG.3 is a block diagram illustrating configuration of the authenticating apparatus.

The controller 4 is provided with an image verifying section 40 and a CPU 41.

Each one of the registration switch 6, the enable switch 7, the door sensor 8, the seat sensor 12, the crash sensor 13, and the engine controller 2 is connected to the CPU 41. The CMOS camera 5 is connected to the CPU 41 and to the image verifying section 40.

The image verifying section 40 is connected to the CPU 41. The image verifying section 40 includes a registration section 40A, an image processing section 40B, and a comparison section 40C.

In a registration process, the registration section 40A is adapted to store, as a registered facial image, computed feature data corresponding to a facial image captured by the CMOS camera 5.

The image processing section 40B is adapted to extract computed feature data from a facial image captured by the CMOS camera 5. The image processing section 40B feeds the data to the registration section 40A in the registration process, or to the comparison section 40C in the authenticating process. The comparison section 40C is adapted to compare the computed feature data fed from the image processing section 40B with computed feature data corresponding to the registered facial image. In other words, the comparison section 40C compares the captured facial image with the registered facial image in the authenticating process.

The comparison section 40C feeds a comparison result to the CPU 41. The CPU 41 outputs an acknowledge signal to the engine controller 2, if a match of the respective facial images is made. Upon receipt of the acknowledge signal, the engine controller 2 permits a driver to start an engine with an ignition switch.

The image processing section 40B extracts computed feature data in a process such as described below.
(1) The image processing section 40B extracts a facial image from an entire image captured by the CMOS camera 5, by distinguishing density gap between the facial image and a background image. If a captured image is a color image, the image processing section 40B extracts the facial image from the entire image by distinguishing a skin colored area.
(2) Then, the image processing section 40B searches the extracted image of (1) for distinguishable facial parts such as an eye, a nose, and a mouth. After completion of the search, the image processing section 40B detects a center point and edge points of each of the facial parts.
(3) The image processing section 40B detects a geometric positional relation of the facial parts based on the center points and edge points, and computes feature data corresponding to the geometric positional relation. The method of extracting a facial image by distinguishing a skin colored area is described, for example, in Japanese Patent application laid open No. 2004-20666A, the disclosure of which is incorporated herein by reference.

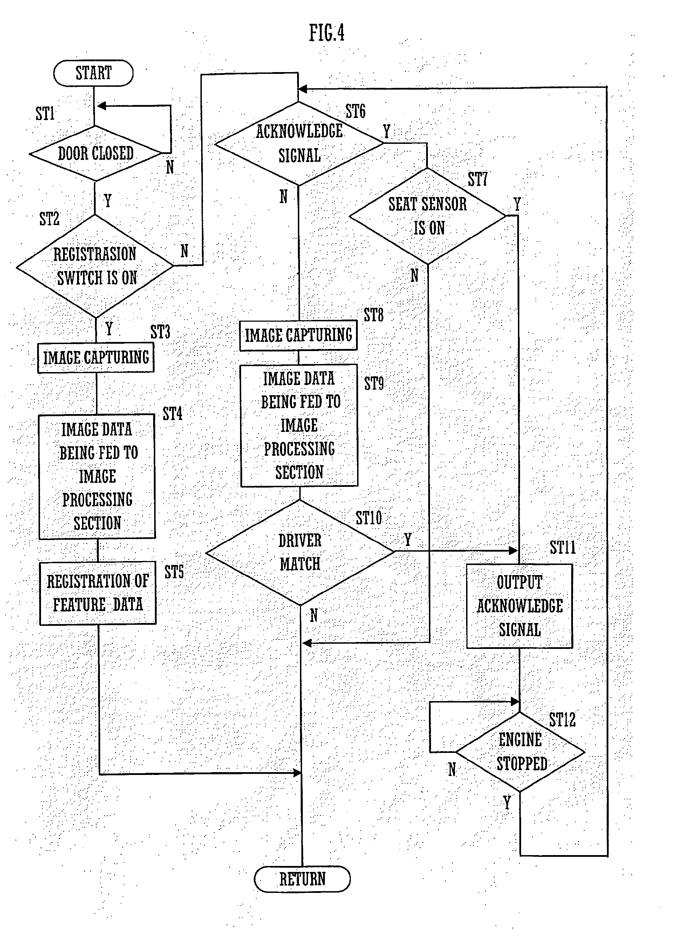

Described below with reference to FIG.4 is an operation performed by the driver authenticating apparatus.

When the door sensor 8 detects that a door adjacent to the driver seat shifts from open state to closed state at step ST1, the controller 4 determines that a driver is seated and proceeds to step ST2.

The controller 4 determines whether the registration switch 6 is turned on (ST2). When the switch 6 is turned on at step ST2, the controller 4 shifts to a registration mode for registering a facial image. On the contrary, when the switch 6 is not turned on at step ST2, the controller 4 shifts to a facial recognition mode.

In the registration mode, a facial image of a driver is captured by the CMOS camera 5 (ST3), and the captured image is fed to the image processing section 40B (ST4). The image processing section 40B extracts the feature data from the captured facial image, and registers the extracted feature data in the registration section 40A (ST5).

When the switch 6 is not turned on at step ST2, the controller 4 shifts to the facial recognition mode and proceeds to step ST6. At step ST6, the controller 4 determines whether an acknowledge signal is already output for an ongoing driving duration.

Specifically, the controller 4 determines whether the acknowledge signal is fed to the engine controller 2 at the start of the driving at step ST6.

When the controller 4 determines that the acknowledge signal is not fed to the engine controller 2 at step ST6, the controller 4 proceeds to step ST8, and performs a driver authentication because the driver is not yet authenticated.

At step ST8, a facial image of a driver is captured by the CMOS camera 5. The captured image is fed to the image processing section 40B. The image processing section 40B extracts the feature data from the captured facial image(ST9).

The captured facial image is compared with a authorized facial image pre-registered in the registration section 40A (ST10). If match of the facial images is made, the acknowledge signal is fed to the engine controller 2 (ST11). It is to be noted that the driver's facial image is compared with all authorized facial images registered in the registration section 40A. If the match is not made, the controller 4 returns to step ST1 without outputting an acknowledge signal.

After outputting the acknowledge signal at step ST11, the controller 4 move on to step ST6 upon stoppage of a car engine (ST12). In this case, the controller 4 move on from step 6 to step ST7 since the acknowledge signal is already fed to the engine controller 2. At step ST7, the controller 4 determines whether the seat sensor detects presence of the driver.

If the seat sensor 12 does not detect presence of the driver at step ST7, the controller 4 determines that the driver leaves the car and returns to step ST1.

If the seat sensor 12 detects the presence of the driver at step ST7, the controller 4 determines that the driver does not leave the driver seat, and feeds the acknowledge signal to the engine controller 2. Accordingly, the driver authenticating apparatus allows the driver to restart the car engine without another authentication procedure.

Although the controller 4 determines whether or not the driver leaves the driver seat through the seat sensor 12, the door sensor 8 or a seatbelt sensor may be used in conjunction with the seat sensor 12 to detect whether the driver leave the driver seat or not. Using the door sensor 8 or a seatbelt sensor in conjunction with the seat sensor 12 enables the driver authenticating apparatus to skip an authenticating procedure in such situation that the driver gets out of the driver seat to reach for a baggage inside the car.

The CMOS camera 5 may be used to detect whether the driver is in the driver seat or not. For example, the driver's presence can be declared if a facial image captured by the CMOS camera 5 keeps unchanged. On the other hand, the driver's absence can be declared if the CMOS camera 5 detects change of the driver's body position caused by the driver's leaving.

Instead of, or in conjunction with the seat sensor 12, the shock sensor 13 such as an acceleration sensor may be used to determine whether the controller 4 should output the acknowledge signal or not. For example, the controller 4 outputs the acknowledge signal to the engine controller 2 upon activation of the shock sensor 13. Accordingly a driver authentication is not required to restart the car after a car accident.

The steps shown in FIG.4 are not performed, with the enable switch 7 turned off. Accordingly, with the enable switch 7 turned off, the engine is started every time the ignition switch is turned on.

Fingerprints, irises, retinas or veins may be used as biological information instead of a facial image.

The foregoing embodiments are illustrative in all points and should not be construed to limit the present invention. The scope of the present invention is defined not by the foregoing embodiment but by the following claims. Further, the scope of the present invention is intended to include all modifications within the meanings and scopes of claims and equivalents.

## Claims

1. An apparatus for authenticating a driver of a vehicle, the apparatus comprising:
an authenticating section (40) adapted to authenticate a person (3) in a driver seat of the vehicle (1) by activating an engine;
an ignition controller (2) adapted to permit an authenticated person to start the vehicle (1);
a control section (4) adapted to activate the ignition controller (2) to permit the authenticated person to start the vehicle,
a driver detector (8,12) adapted to detect absence of the authenticated person from the driver seat;
the control section (4) requires another authentication process by the authenticating section (40) in order to activate the ignition controller (2) if the driver detector (8,12) detects absence of the authenticated person from the driver seat;
**characterized in that**:
the authenticating section (40) is biometric and **in that** the control section (4) does not require another authentication process by the biometrics authenticating section (40) in order to activate the ignition controller (2) if the driver detector (8,12) does not detect absence of the authenticated person from the driver seat during an interval between deactivation and reactivation of the engine.

2. The authenticating apparatus according to claim 1,
wherein the biometrics authenticating section (40) has an image capturing section (5) adapted to capture a facial image of the person (3) in the driver seat; and
wherein the biometrics authenticating section (40) compares the captured facial image with a pre-registered facial image of an authorized driver, and authenticates the person (3) based on a result of the comparison.

3. The authenticating apparatus according to claim 1 or 2, further comprising a shock sensing section (13) adapted to detect a predetermined shock applied to the vehicle (1),
wherein, for a predetermined period after detection of the predetermined shock, the control section (4) requires neither authentication by the biometrics authenticating section (40) nor detection by the driver detector (8, 12) in order to activate the ignition controller (2).

4. The authenticating apparatus according to any of claims 1 to 3,
wherein the driver detector (8,12) includes a seat sensor (12) disposed in the driver seat, and
wherein the driver detector (8,12) determines absence of the person from the driver seat when the seat sensor (12) detects that the driver (3) has left the driver seat for a predetermined period.

5. The authenticating apparatus according to any of claims 2 to 4,
wherein each of the captured facial image and the authorized driver's facial image is represented as computed feature data corresponding to geometric positional relations among facial parts.

6. The authenticating apparatus according to claim 5,
wherein the biometrics authenticating section (40) extracts the computed feature data from the captured facial image.

## Patentansprüche

1. Vorrichtung zur Authentifizierung des Fahrers eines Kraftfahrzeugs, umfassend:
einen Authentifizierungsabschnitt (40), welcher zur Authentifizierung einer Person (3) in dem Fahrersitz eines Kraftfahrzeugs (1) durch Einschalten eines Motors geeignet ist,
eine Zündungssteuerung (2), welche geeignet ist, einer authentifizierten Person das Starten des Kraftfahrzeugs (1) zu gestatten,
einen Steuerabschnitt (4), welcher geeignet ist, die Zündungssteuerung (2) zu aktivieren, um der authentifizierten Person das Starten das Kraftfahrzeugs zu gestatten,
einen Fahrerdetektor (8, 12), welcher geeignet ist zu erkennen, dass die authentifizierte Person nicht in dem Fahrersitz anwesend ist,
wobei der Steuerabschnitt (4) einen weiteren Authentifizierungsvorgang durch den Authentifizierungsabschnitt (40) benötigt, um die Zündungssteuerung (2) zu aktivieren, falls der Fahrerdetektor (8, 12) erkennt, dass die authentifizierte Person nicht in dem Fahrersitz anwesend ist,
**dadurch gekennzeichnet, dass**
der Authentifizierungsabschnitt (40) biometrisch ist und der Steuerabschnitt (4) keinen weiteren Authentifizierungsvorgang durch den biometrischen Authentifizierungsabschnitt (40) benötigt, um die Zündungssteuerung (2) zu aktivieren, falls der Fahrerdetektor (8, 12) in einem Zeitraum zwischen Ausschalten und Wiedereinschalten des Motors erkennt, dass die authentifizierte Person in dem Fahrersitz anwesend ist.

2. Authentifizierungsvorrichtung nach Anspruch 1,
wobei der biometrische Authentifizierungsabschnitt (40) einen Bilderfassungsabschnitt (5) umfasst, welcher geeignet ist, ein Bild vom Gesicht der Person (3) in dem Fahrersitz zu erfassen, und
wobei der biometrische Authentifizierungsabschnitt (40) das erfasste Gesichtsbild mit dem zuvor registrierten Gesichtsbild eines befugten Fahrers vergleicht und die Person (3) auf Grundlage des Vergleichsergebnisses authentifiziert.

3. Authentifizierungsvorrichtung nach Anspruch 1 oder 2, welche ferner einen Stoßmeldeabschnitt (13) umfasst, welcher geeignet ist, einen auf das Kraftfahrzeug (1) ausgeübten vordefinierten Stoß zu erkennen,
wobei der Steuerabschnitt (4) für einen vorgegebenen Zeitraum nach dem Erkennen des vordefinierten Stoßes weder eine weitere Authentifizierung durch den biometrischen Authentifizierungsabschnitt (40) noch ein Erkennen durch den Fahrerdetektor (8, 12) benötigt, um die Zündungssteuerung (2) zu aktivieren.

4. Authentifizierungsvorrichtung nach einem der Ansprüche 1 bis 3,
wobei der Fahrerdetektor (8, 12) einen in dem Fahrersitz angeordneten Sitzsensor (12) umfasst und
wobei der Fahrerdetektor (8, 12) feststellt, dass die Person nicht in dem Fahrersitz anwesend ist, wenn der Sitzsensor (12) erkennt, dass der Fahrer (3) den Fahrersitz für einen vorgegebenen Zeitraum verlassen hat.

5. Authentifizierungsvorrichtung nach einem der Ansprüche 2 bis 4,
wobei das erfasste Gesichtsbild und das Gesichtsbild des befugten Fahrers jeweils als berechnete Merkmalsdaten vorliegen, die geometrischen Positionsbeziehungen zwischen den Gesichtspartien entsprechen.

6. Authentifizierungsvorrichtung nach Anspruch 5,
wobei der biometrische Authentifizierungsabschnitt (40) die berechneten Merkmalsdaten aus dem erfassten Gesichtsbild gewinnt.

## Revendications

1. Appareil pour authentifier un conducteur d'un véhicule, l'appareil comprenant :
une section d'authentification (40) adaptée pour authentifier une personne (3) dans un siège de conducteur du véhicule (1) en activant un moteur ;
un contrôleur d'allumage (2) adapté pour permettre à une personne authentifiée de démarrer le véhicule (1) ; une section de contrôle (4) adaptée pour activer le contrôleur d'allumage (2) pour permettre à la personne authentifiée de démarrer le véhicule ;
un détecteur de conducteur (8, 12) adapté pour détecter l'absence de la personne authentifiée du siège de conducteur ;
la section de contrôle (4) nécessite un autre processus d'authentification par la section d'authentification (40) pour activer le contrôleur d'allumage (2) si le détecteur de conducteur (8, 12) détecte l'absence de la personne authentifiée du siège de conducteur ;
**caractérisé en ce que**:
la section d'authentification (40) est biométrique et **en ce que** la section de contrôle (4) ne nécessite pas un autre processus d'authentification par la section d'authentification biométrique (40) pour activer le contrôleur d'allumage (2) si le détecteur de conducteur (8, 12) ne détecte pas l'absence de la personne authentifiée du siège de conducteur pendant un intervalle entre la désactivation et la réactivation du moteur.

2. Appareil d'authentification selon la revendication 1,
dans lequel la section d'authentification biométrique (40) a une section d'acquisition d'image (5) adaptée pour acquérir une image faciale de la personne (3) dans le siège de conducteur ; et
dans lequel la section d'authentification biométrique (40) compare l'image faciale acquise à une image faciale préenregistrée d'un conducteur autorisé, et authentifie la personne (3) sur la base d'un résultat de la comparaison.

3. Appareil d'authentification selon l'une quelconque des revendications 1 et 2, comprenant en outre une section de détection de choc (13) adaptée pour détecter un choc prédéterminé appliqué au véhicule (1),
dans lequel, pendant une période prédéterminée après la détection du choc prédéterminé, la section de contrôle (4) ne nécessite pas d'authentification par la section d'authentification biométrique (40) ni de détection par le détecteur de conducteur (8, 12) pour activer le contrôleur d'allumage (2).

4. Appareil d'authentification selon l'une quelconque des revendications 1 à 3,
dans lequel le détecteur de conducteur (8, 12) comprend un capteur de siège (12) disposé dans le siège de conducteur, et
dans lequel le détecteur de conducteur (8, 12) détermine l'absence de la personne du siège de conducteur lorsque le capteur de siège (12) détecte que le conducteur (3) a quitté le siège de conducteur pendant une période prédéterminée.

5. Appareil d'authentification selon l'une quelconque des revendications 2 à 4,
dans lequel chacune de l'image faciale acquise et de l'image faciale du conducteur autorisé est représentée en tant que données de caractéristiques calculées correspondant à des relations positionnelles géométriques entre les parties faciales.

6. Appareil d'authentification selon la revendication 5,
dans lequel la section d'authentification biométrique (40) extrait les données de caractéristiques calculées à partir de l'image faciale acquise.
